# EUROPEAN PATENT APPLICATION

(11) **EP 0 774 433 A1**
(43) Date of publication of application: **21.05.1997**
(21) Application number: 96117712.8
(22) Date of filing: 06.11.1996
(51) Int. Cl.: B65G 61/00

(54) **Device for extracting and forwarding packs of sheets, blanks or the like, especially for cigarettes packaging machines**

(30) Priority: 15.11.1995 IT GE950122
(71) Applicant: SASIB S.p.A., I-40128 Bologna (IT)
(72) Inventor: Martoccia, Nicola, 40100 Bologna (IT)
(74) Representative: Karaghiosoff, Giorgio Alessandro, Dipl.-Phys.

(57) **Abstract**

A device for extracting and forwarding packs of sheets, blanks or the like, especially for the packaging of cigarettes and in cigarette packaging machines, comprises means for separating the uppermost pack (2) from a stack (4) of packs (2) of packaging sheets. Said means consist of a blade (218) for separating and supporting the uppermost pack (2) from the pack (2') underneath it. The blade (218) is connected to means of movement (4, 6, 7, 8, 9, 10, 12) for executing a stroke of positioning, a stroke of extraction of the pack (2) and a stroke of forwarding the latter to the processing machine (3, 11). In combination with the separating blade (218) there are blower means (22) for generating, in the direction of the plane of separation between the target pack (2) and the pack (2') underneath it, a jet of air at sufficient pressure to lift the uppermost pack (2).

## Description

The invention relates to a device for extracting and forwarding packs of sheets, blanks or the like, especially for the packaging of cigarettes and in cigarette packaging machines, which device comprises means for separating the uppermost pack from a stack of packs of packaging sheets, which means consist of a horizontal blade for separating and supporting the uppermost pack from the pack immediately below it on which it is resting, and from any packs that may be adjacent to the target pack on one or more faces thereof, which blade is connected to means of movement for positioning it in a position of readiness in front of at least one predetermined free face of the particular target pack and for executing a first stroke in which the separating blade is inserted between the lower face of the uppermost pack and the horizontal upper face of the pack immediately underneath it; a second stroke in which the extracted pack is removed from the lower pack and from any laterally adjacent packs, and in which it is moved to a position of non-interference with such; and a stroke in which the extracted pack is transferred to a subsequent processing machine, such as a cigarette packaging machine, or to means for conveying the extracted pack to said subsequent processing machine, while at the same time said separating blade acts as a support surface for the extracted pack while the latter is being transferred and forwarded from the stack to the processing machine or to the other conveying means.

Especially in the case of machines - such as cigarette packaging machines - for packing loose objects in stiff boxes of carton board or the like, the boxes are made up from preshaped blanks which are handled in packs. These in turn are grouped into stacks in which each layer is made up of at least one, preferably two or more, packs of packaging sheets that are lined up in a plurality of adjacent rows.

The packs are extracted one at a time from each stack by an extracting and forwarding device that separates and removes the uppermost pack, or one of the uppermost packs, from those adjacent to and underneath it.

At present the means for extracting single packs comprise a separating blade designed to be inserted between the target pack and the pack underneath: this blade is also used as the means for supporting the extracted packs during their transfer from the stack to the packaging machine. The separating blade is generally moved into a position of readiness in front of the free face of a target pack and is supported in such a way as to be inserted underneath this pack with a reversible movement. However, the insertion of the blade causes problems and often results in damage to the packs or in other malfunctions.

It is therefore an object of the invention to provide a device as described at the outset, in such a way that, by application of relatively simple means, the operational shortcomings of known constructions can be to a large extent eliminated, thus providing faster and more reliable operation.

The invention achieves these objects with a device of the type described at the outset which, in combination with the separating and supporting blade, comprises blower means directed at the plane of separation between the target pack and the pack immediately underneath it and that generate in the direction of said plane, that is to say towards the lower edge of the free face of the target pack, a jet of air at sufficient pressure to lift the uppermost pack from that immediately below it.

The separating and supporting blade is supported so that it can move together with the blower means into the position of readiness, whereas it can be moved separately relative to them from the position of readiness to the position of extraction, between the uppermost target pack and the pack immediately below it.

The blower means advantageously comprise blower nozzles which in the position of readiness for working are located immediately in front of the free insertion face of the uppermost pack, at a predetermined distance from it, and are directed at the plane of separation between the two superimposed packs, while the separating and supporting blade is located in the correct position of vertical alignment in order to extract the pack, and is inserted between the two packs with a translational movement along a path parallel to the lower face of the pack, that is to say generally approximately horizontal and rectilinear against said free face of the pack, after which it is removed from any packs adjacent either on the transverse face with respect to the insertion stroke of the separating blade or on those faces that are orientated parallel to said insertion stroke, with a backward and/or upward movement of the separating and supporting blade.

Owing to the fact that, if each layer of the stack is made up of a plurality of adjacent packs or packaging sheets, the separating blade must not come into contact with the latter during its translational movement, in the correct vertical position of extraction which the blade assumes in the condition of readiness, the separating and supporting blade is a certain distance above the upper face of the lower layer of packs of packaging sheets and is orientated approximately parallel with this face, while on its free inserting end there is a thin end tongue that slopes towards said upper face, that is to say towards the plane of separation between the uppermost pack and that immediately below it and whose free forward edge ends a very short distance from said upper face.

The blower nozzles are so constructed as to generate a jet directed approximately perpendicularly to the lower edge of the free face of the target pack and extending along a front parallel to the lower edge of the pack on the free face where the separating and supporting blade is inserted, with a predetermined length, which may be less than the length of said lower edge and which is preferably confined within a space approximately equal to the width of the separating and supporting blade and which has very little thickness.

Advantageously, the separating jet of air is oriented so as to slope down towards the lower edge of that free face of the target pack which is nearest to the separating and supporting blade.

This slope is adjustable, the blower nozzles being able to pivot about an axis parallel to the lower face of the target pack.

The blower nozzles are also provided with means for cutting off the jet of air when the tongue of the separating blade has entered a very short predetermined distance under the target pack.

In particular, according to the invention the blower nozzles are supported so as to project transversely from the exterior towards the centre of the separating blade, immediately above the latter, and are mounted on horizontal spindles from which they project radially towards the target pack, said spindles being supported, so as to be able to rotate about their axis, while the blower nozzles are positioned at a height relative to the separating blade such that, in a predetermined position of short insertion of the sloping tongue beneath the target pack, the blower nozzles are contacted by an intermediate portion of said sloping tongue and are pivoted upwards by the latter as the pack extraction stroke continues, against the action of elastic means for restoring the blower nozzles to their initial angular position, into a raised angular position, in which they interfere with sensors that control the compressed air supply, such as a light barrier, or the like.

Another feature is that the separating and supporting blade is formed by the movable lower jaw of a grab comprising, away from the insertion part, a wall perpendicular to said blade, that is vertical, which abuts against the opposing free face of the target pack, while the opposing upper jaw can be moved in a perpendicular direction relative to said blade, that is relative to the upper face of the target pack.

The upper jaw has at least one other pressing member which is positioned over the opposite face of the pack from that nearest the separating and supporting blade and which compresses the target pack perpendicularly to its upper and lower faces, producing an effect of lifting and/or of relieving the weight on the upper face of the pack immediately underneath it, especially in that area of the lower face of the target pack which lies at its edge facing the separating and supporting blade.

The upper jaw may also have other pressing members acting on adjacent packs, both on the transverse wall remote from the separating and supporting blade and on the walls orientated in the direction of insertion of the separating and supporting blade, which means remain active, keeping said adjacent packs in position at least during the stroke of insertion of the separating and supporting blade between the target pack and the pack underneath it.

In one advantageous form of construction, the pressing members for tilting the target pack and those for keeping the adjacent packs in position are formed by at least one single pressing member carrying out both said functions, preferably by two or more pressing members also carrying out both said functions and so positioned as to act at the corners of that face which is transverse with respect to the direction of insertion of the separating blade and furthest from the latter, partially on the target pack and on at least one of the other, immediately adjacent packs, preferably simultaneously on more than one of said adjacent packs.

Said pressing members are preferably arranged so as to place themselves simultaneously both on the corners of the target pack and on the adjacent corners of all the remaining packs surrounding the target pack, in particular those of the three adjacent packs if the latter are approximately rectangular parallelepipeds.

Since it is possible that, if the packaging sheets are of a predetermined shape in plan view, the packs of these sheets may also be rotated alternately through 180ø, the extractor means comprising the movable jaw with the separating and supporting blade, the compressor means, the blower nozzles and the means for guiding and actuating the separating and supporting blade along its rectilinear insertion and return stroke, are additionally supported so as to be able to rotate about an axis perpendicular to the upper face of the packs of packaging sheets, that is in particular about a vertical axis, so as to be able to rotate the device to suit the orientation of the packs and always bring them to the subsequent processing machine with the correct predetermined orientation.

The extractor device according to the invention also comprises a plurality of sensors for monitoring the strokes of insertion and removal, and for monitoring the position of readiness. These sensors may take the form of proximity sensors that read the distance between the vertical abutment wall of the grab jaw associated with the separating and supporting blade and proximity sensors that read the correct distance between the separating blade and the plane of separation between the target pack and the pack immediately below it, as well as sensors of the positioning of the blower nozzles and of the extracting blade or of the jaw in the correct position of extraction.

The extractor device according to the invention is advantageously suspended from a horizontal carriage travelling along a rectilinear horizontal guide which is orientated in the forwarding direction, while said guide is integral with a carriage suspended from and travelling along a second horizontal guide, transverse to the first, and said second guide is carried cantilever-fashion aligned with the vertical mid plane of the stack of packs of packaging sheets, above this stack, by brackets that can be raised and lowered.

The extractor device comprises a frame suspended from the associated carriage in such a way that it can rotate about a vertical axis, while another horizontal rectilinear guide is suspended from said frame for the grab jaw and the separating and supporting blade as well as the stationary means supporting the blower nozzles and pressing members.

The above account will have made clear the advantages of the present invention. The particular way in which the separating and supporting blade is controlled as it is inserted between the target pack and the pack below it, in combination with the sloping tongue attached to its front end and the blower means, all enable the target pack to be separated from the stack underneath it in a fast, reliable manner which much reduces losses. The provision of the pressing member for tilting the target pack and holding adjacent packs in position further enhances the reliability of the extraction and means that adjacent packs are not moved in the process of extracting a pack. The packs are consequently always correctly positioned for extraction. The fact that the separating and supporting blade and other associated means can be orientated freely about a vertical axis enables the extractor means to be adapted to any orientation of the packs in the horizontal plane whether this is due to the position in the stack or to a change in the orientation of the packs within the stack.

The invention also includes other features which further enhance the device described above, and these are the subject of the dependent claims.

The special features of the invention and the attendant advantages will be discussed in greater detail in the description of a preferred embodiment, illustrated by way of a non-restrictive example in the accompanying drawings, wherein:
Fig. 1 shows in perspective a magazine for forwarding packs of packaging sheets, fitted with an extractor-forwarder device according to the invention.
Fig. 2 illustrates an enlarged side view of the device according to the invention, showing the separating and supporting blade at the end of its stroke of insertion between the uppermost target pack and the pack immediately below it.
Fig. 3 shows a front view in the direction of the forwarding stroke of the device shown in Fig. 1.
Fig. 4 is a plan view from above of said device as shown in the previous figures, in the position in which the separating blade is at the end of its insertion stroke, with activation of the upper jaw for clamping the target pack and of the pressing members for holding adjacent packs and tilting the target pack up.
Figs. 5 and 6 show in side view and plan view from above, respectively, details of the blower nozzles and of the vertical-position sensors of the device of the previous figures.
Figs. 7 and 8 show two instants during the insertion of the separating and supporting blade between the target pack and that underneath it, the former in the position of readiness and the latter likewise in the position of readiness but after activation of the lifting jet and activation of the pressing means for tilting the target pack up.
Fig. 9 illustrates a detail of the separating blade and of the blower nozzles in the position of mutual interference such that the latter are lifted upwards to a position of detection by means of sensors.

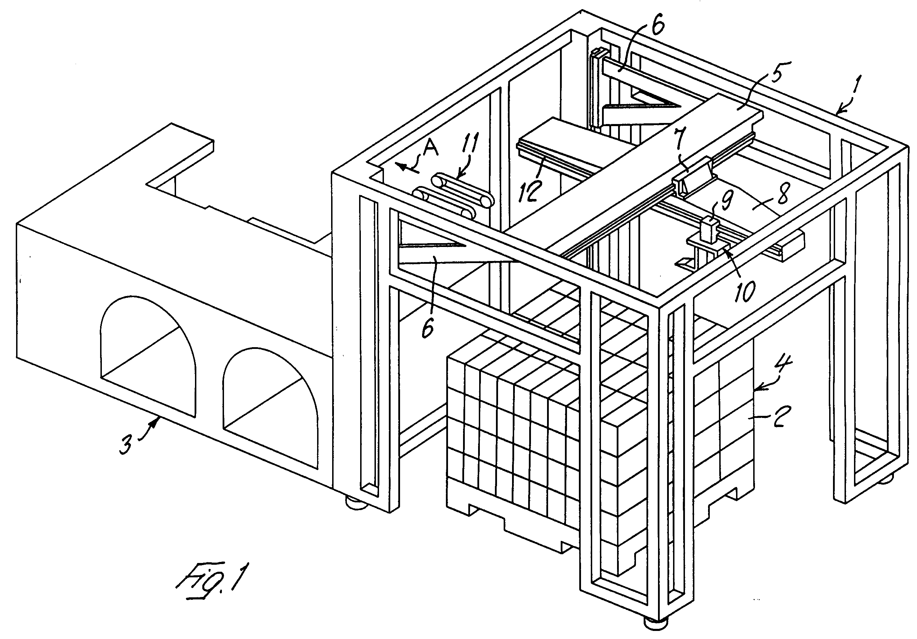

Fig. 1 shows a magazine 1 from which packs 2 of packaging blanks are forwarded to a subsequent processing machine 3, such as a cigarette packaging machine for forming hard packs of cigarettes.

The magazine 1 contains a storage space for a stack 4 of packs 2, which stack is composed of a plurality of superimposed layers, each of which contains a plurality of packs 2 arranged in contact with each other in a plurality of adjacent rows.

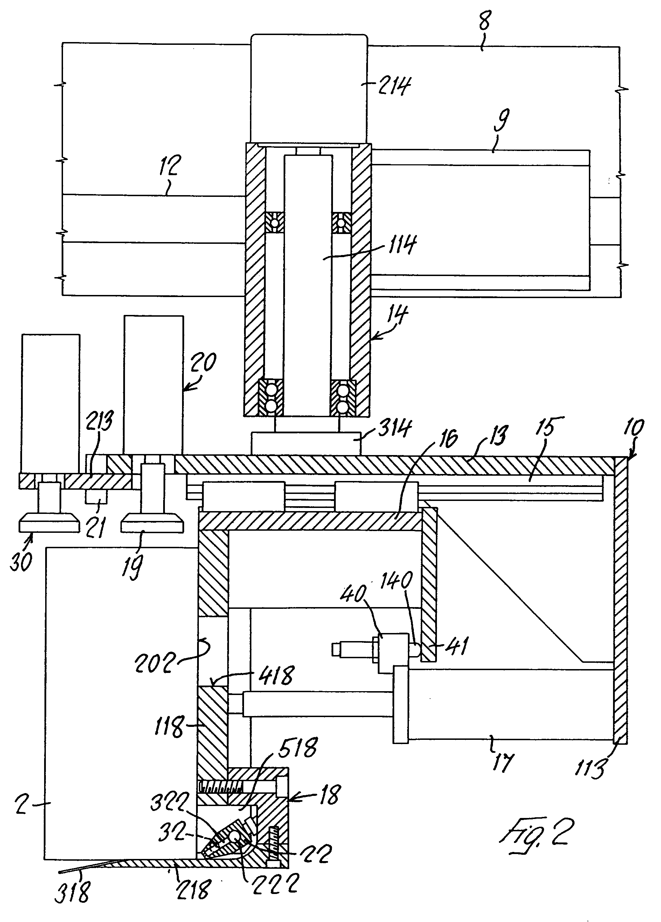

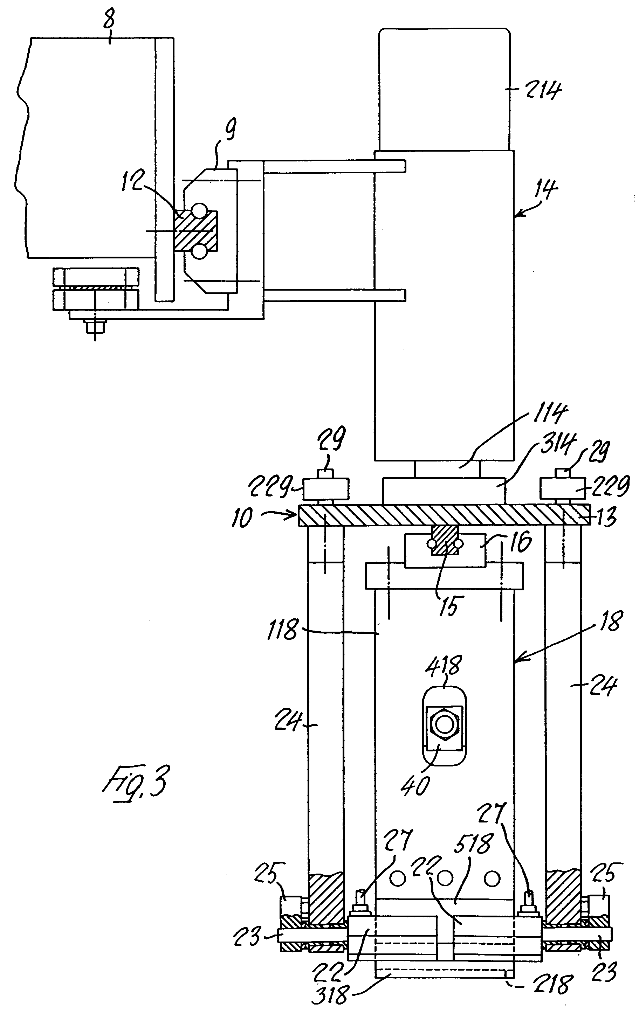

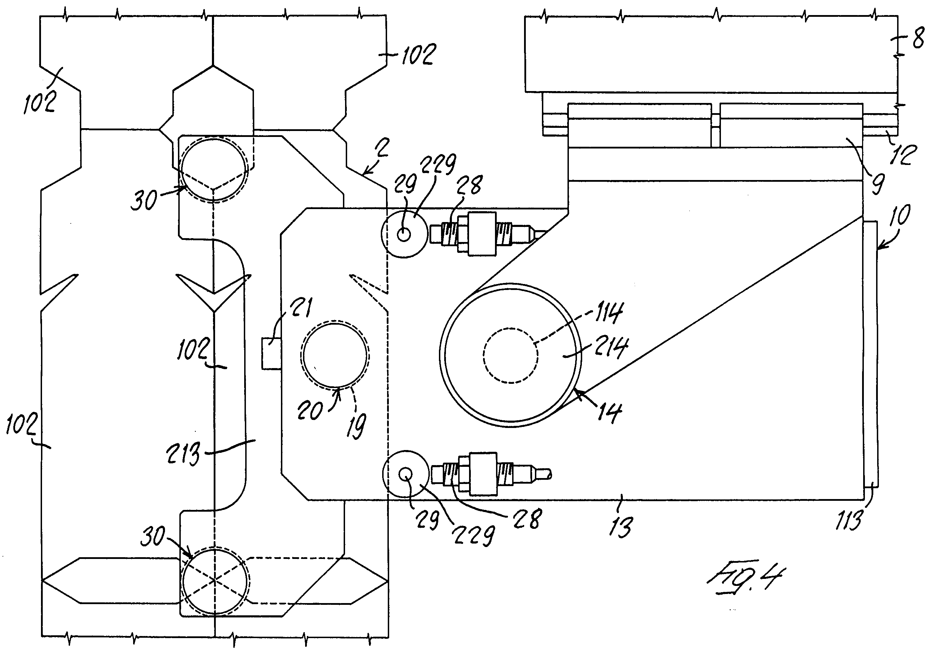

Above the stack 4 of packs 2 of blanks 102 (see Fig. 4) is a first horizontal beam 5 supported cantilever-fashion and approximately vertically aligned with the vertical mid plane of the stack 4 which is oriented transversely to the forwarding direction indicated by the arrow A. The beam 5 is supported at each end by brackets 6 traveling vertically up and down on guides. Slung underneath this beam on a carriage 7 able to travel in both longitudinal directions of said first beam 5 is another beam 8 at right angles to said first beam 5 and hence orientated in the direction A in which the packs 2 are forwarded to the processing machine 3.

Mounted so as to be able to travel backwards and forwards along the lower beam 8, that is in the forwarding axis A, is a second carriage 9 from which is slung an extracting and conveying device bearing the general reference 10: this device separates one pack 2 from the stack 4 and conveys it to the entrance of the processing machine 3 or to intermediate means 11 of conveyance of the packs 2 to said processing machine 3.

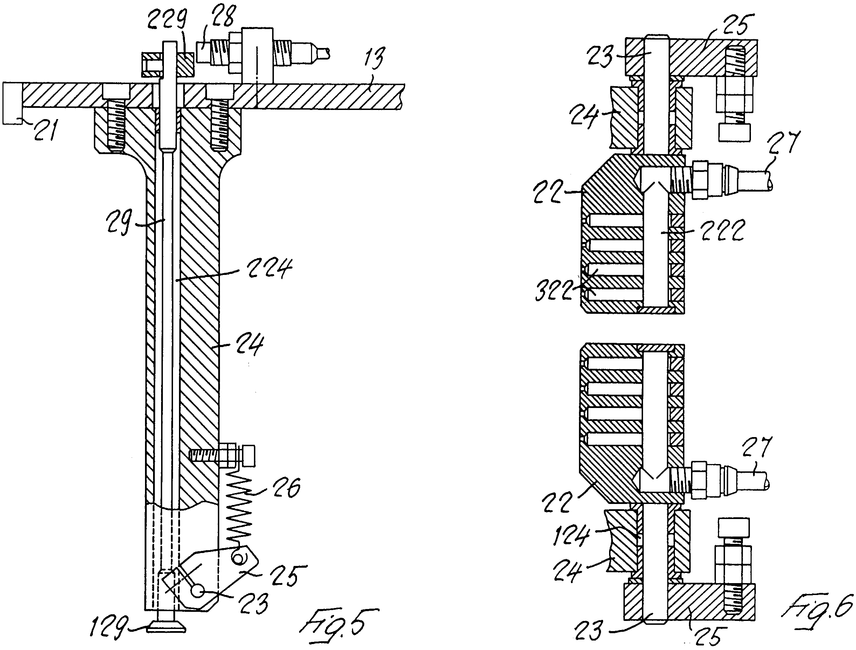

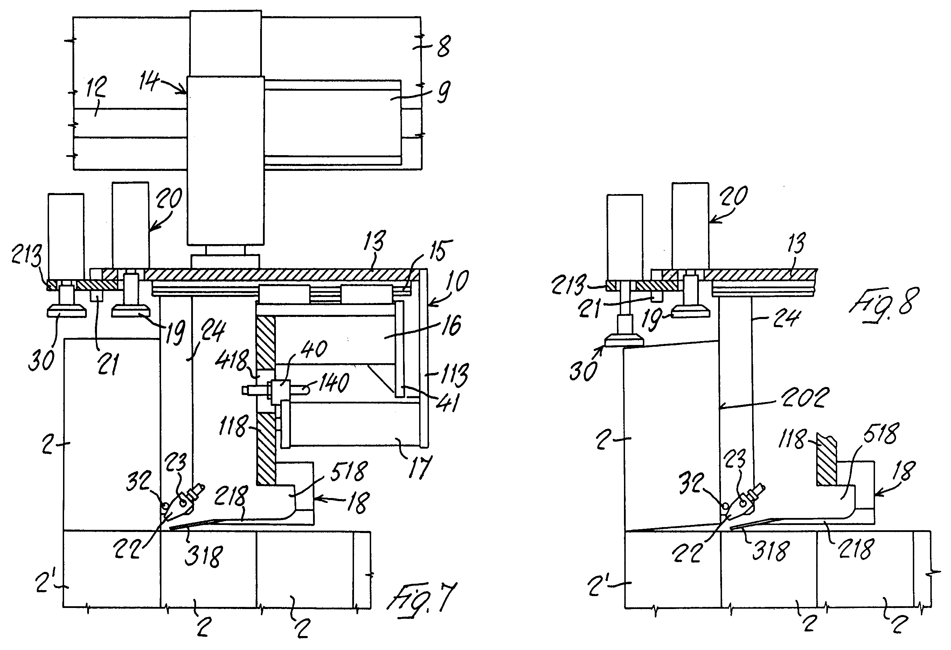

With reference to Figs. 2 to 6, the device 10 for extracting and forwarding the packs 2 to the processing machine 3, or to the conveying means 11, is slung from a carriage 9 that runs on a lateral guide 12 fixed to the side of the lower beam 8. The means used to drive the carriage 9 may be of any kind, such as a screw-and-nut drive, with the screw being turned by a motor, also supported by the beam 8.

The extracting and forwarding device 10 possesses a plate 13 which is slung under the carriage 9 and under the beam 8 on a vertical spindle 114 forming part of a unit for controlling the angular orientation 14 of the extracting and forwarding means 10, which spindle is caused to rotate by a motor 214 and is attached at its lower end to the horizontal plate 13 by means of a flange 314.

Fixed to the underside of the plate 13 is a horizontal guide 15, under which is slung a sliding block 16 which travels backwards and forwards along said guide and is driven by a linear actuator 17 interposed parallel to the guide 15 between a vertical transverse wall 113 that is integral with and extends vertically down from the plate 13 and a vertical transverse wall 118 forming part of a grab for grasping the packs of packaging sheets, which vertical wall 118 is fixed to the sliding block 16 and moves together with it.

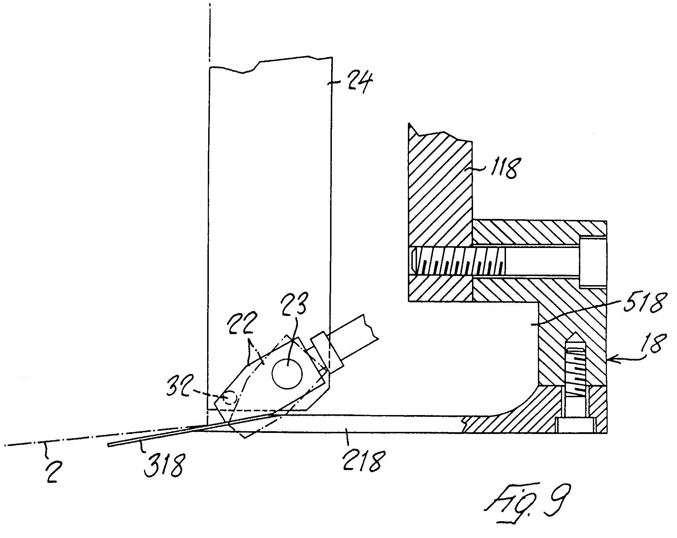

The grab has a lower jaw 18 that travels along the guide 15 and which comprises in addition to the vertical wall 118 a flat horizontal separating blade 218 projecting towards the target pack 2, that is to say away from the linear actuator 17. The separating blade 218 is intended to be inserted between the lower face of the uppermost target pack 2 and the corresponding upper face, on which the latter is resting, of the pack 2' underneath (see also Figs. 7 and 8), the blade also acting as the supporting surface for the pack 2 during the conveying of this pack 2 to the processing machine 3.

With reference also to Figs. 7 and 8, by means of the height-adjustable beam 5, the transversely movable lower beam 8 and the handling carriage 9 of the device 10 for extracting the packs 2 and forwarding them in the forwarding direction A to the processing machine 3 or to the conveyor means 11, it is possible to move the movable jaw 18 into the position of readiness (Figs. 7 and 8), in which it is already horizontally aligned in the position for extracting the uppermost pack 2, in front of its free transverse face 202, while in said position of readiness the sliding block 16 carrying the jaw is at the rear end of its stroke, corresponding to the furthest end of the guide 15 from the target pack 2.

The length of the stroke of the sliding block 16 carrying the jaw is such that the end of the stroke of movement towards the target pack 2 places the movable jaw 18 in the position in which the target pack 2 is fully supported on the separating and supporting blade 218 and its free transverse face is in abutment against the vertical wall 118 of said movable jaw 18 (Fig. 2).

The movement of the sliding block 16 carrying the jaw is monitored by a sensor 21, such as a light barrier or the like, that is oriented from above down onto the upper face of the target pack 2 and by an end-of-stroke stop 40 that encounters a rear abutment projection 41 connected to the sliding block 16 and that advantageously comprises elastic means of progressive deceleration 140, such as for example a component able to travel in the direction of movement of the sliding block and against an elastic means, in particular something such as a dashpot or the like. When the sliding block 16 is at the rear end of its stroke, the decelerator means pass through a window 418 in the vertical abutment wall 118 of the movable jaw 18, to avoid any interference between said jaw 18 and these means.

On an extension of the plate 13 that overhangs the separating and supporting blade 218 in the pack 2 extraction position (Fig. 2), there is at least one vertical pressing member 19 that serves as the pack 2 clamping jaw, being movable at right angles to the separating and supporting blade 218. The vertical pressing member 19 is operated by a linear actuator 20 which is positioned above the extension of the plate 13 and is mounted stationary on the plate 13 while the sliding block 16 moves.

In the region of the joint between the vertical abutment wall 118 and the separating and supporting blade 218 of the movable jaw 18 there is formed a concave recess 518, open at the sides of the movable jaw 18, and in which the blower nozzles 22 are accommodated when the pack 2 is in the extraction position.

The blower nozzles 22 consist of two components supported so as to project transversely relative to the movable jaw 18, from the exterior towards the centre of the jaw, on respective horizontal spindles 23, to which they are coupled in rotation. The portions of the spindles 23 external to the sides of the movable jaw 18 are guided through a hole 124 in vertical pillars 24 arranged externally to the two sides of the movable jaw 18, the top ends of these pillars 24 being fixed to the plate 13. Coupled in rotation to the external end of each spindle 23, for example by means of a clamp, is a radial lever 25, which extends approximately in the diametrically opposite direction to the direction of the nozzles 22 and whose free end is connected to elastic means 26 connected between said free end of the lever 25 and a point on the corresponding pillar 24.

Each nozzle 22 comprises in its interior a manifold 222 to which is connected a tube 27 via which the compressed air is supplied and from which a horizontal row of mutually parallel holes 322 branch off to emerge at the front of the blower nozzles 22. The manifold 222 lies transversely to the movable jaw 18, while the blower holes 322 lie in the direction of movement of the movable jaw 18.

The positions of the vertical pillars 24 are such that, when the extractor device 10 is in the position of readiness in front of the free face of a pack 2, the blower nozzles are in their operating position and do not need to be moved any more during the separation of the target pack 2 from the pack 2' underneath it.

With reference to Figs. 7 and 8, in the position of readiness and in the pack 2 extraction position, the extracting and forwarding device 10 is positioned in such a way that the upper clamping pressing member 19 is above the upper face of the target pack 2, while the separating blade 218 of the movable jaw 18 is raised a predetermined short distance above the plane formed by the upper faces of the packs of the layer below that of the target pack 2. The free end of the separating blade 218 is formed by a thin tongue 318 whose length is of the order of a few and which slopes down towards the lower edge of the target pack 2, terminating a very short distance from the upper face of the lower layer of packs on which the target pack 2 is resting.

The blower nozzles 22 are orientated so that the axes of their blower holes slope down towards said lower edge of the target pack 2.

In an improvement, illustrated in Fig. 9, the blower nozzles 22 are connected to air supply cut-off means that are activated when the tongue 318 has entered a predetermined short distance under the target pack 2.

To this end, the nozzles 22 and the separating blade 218 with the associated tongue 318 are located at a relative height such that as the tongue 318 is gradually inserted under the target pack 2, beginning at the position of insertion of said sloping tongue 318 to the predetermined short distance, where the nozzles 22 begin to interfere with an intermediate point on said tongue, the nozzles 22 are tilted upwards, causing them to interfere with position sensors 32 which send a signal to interrupt the jet of air. Any kind of sensor may be used, for example light barriers, and the interruption means may be electrically operated valves connected up to the compressed air supply circuit.

The correct vertical position of the extracting and forwarding device 10, and in particular of the movable jaw 18, that is of the separating blade 218 and blower nozzles 22, with respect to the plane of separation between the target pack 2 and the pack 2' immediately underneath it, may be detected by means of suitable sensors. In the example illustrated, the individual layers of packs 2 forming the stack 4 are separated from each other by separating sheets (not shown), which project somewhat beyond the sides of the stack 4. The sensors are therefore in the form of means 28 for detecting the vertical position of a movable rod 29 housed inside a vertical through hole 224 passing through each supporting pillar 24 of the blower nozzles 22. At the lower end of each rod 29 is a pressure foot 129, while the upper end projects externally above the top of the plate 13 and has means 229 of interference acting on an associated stationary sensor 28 mounted on the upper face of the plate 13. The sensor 28 may be a light barrier and the means of interference may consist of means for reflecting or intercepting the emitted radiation, or the like. The rods 29 are positioned in such a way that when the device 10 is in the position of readiness, for extracting a pack 2, on one side of the stack these rods come down against the projecting edge of the underlying separating sheet.

In another advantageous feature of the invention, the plate 13 possesses another extension that extends beyond the pressing member 19 used to clamp the extracted pack 2 down onto the movable jaw 18, in such a way that when the pack 2 extraction device 10 is in the position of readiness, this extension also partially covers the adjacent packs around those faces of the target pack 2 which are not facing the movable jaw 18.

Said extension 213 of the plate 13 carries at least one, and preferably two other pressing members 30 arranged in positions such that they act partially in that region of the upper face of the target pack 2 which is furthest from the movable jaw 18 and partially on at least some or on all of the adjacent regions of the upper faces of the packs touching the target pack 2. Whether or not a single pressing member 30 can press simultaneously on the target pack 2 and on only one of the other neighbouring packs or on two or more of said neighbouring packs, depends on the shape in plan view of the blanks 102. This is shown clearly in Fig. 4 in which one of the two pressing members 30 acts simultaneously on the target pack 2 and on the other three packs that have comers coinciding with the corner of the target pack 2, while the other pressing member can only act on one other pack. More than two pressing members can be provided, if required, so as to maximize the number of packs affected simultaneously.

Said pressing members are activated during the insertion of the separating blade 218 under the target pack 2 and serve to ensure that the packs adjacent to the target pack 2 do not move. Furthermore, the application of a compressible force on the target pack 2 on the opposite side from that via which the separating blade 218 is inserted results in at least a reduction of the downward force of the pack 2 on the side facing the movable jaw 18, and possibly even a slight tilting of the target pack 2 into a position in which, as indicated in Figs. 7 and 8, the lower face of this pack rises a short way off the upper face of the pack 2' underneath it, this effect occurring along at least part of the face nearest the movable jaw 18. This further facilitates the insertion of the separating blade under the target pack 2 and at the same time renders the action of the separating jet of air more effective.

When the pack 2 is positioned on the movable jaw 18 as illustrated in Fig. 2, the pressing members 30 for keeping neighbouring packs in position are deactivated, while the pressing member 19 is activated to clamp the pack 2 to the movable jaw 18. The entire extractor device 10 is then moved back along the beam 8 or simply raised and is advanced towards the pack 2 unloading end at the feed entrance of the processing machine 3 or at conveying means 11.

Because the support of the extractor means 10 can be freely orientated angularly in the horizontal plane, it is possible to extract and forward, to the processing machine 3, always in the correct position, the packs 2 even when these are differently orientated, in particular at 180ø to each other, within the stack 4.

The invention is not of course limited to the embodiments described above and illustrated but can be greatly altered and modified, especially from the constructional point of view, without departing from the underlying principle set forth above and claimed below.

## Claims

1. Device for extracting and forwarding packs of sheets, blanks or the like, especially for the packaging of cigarettes and in cigarette packaging machines, which device comprises means for separating the uppermost pack (2) from a stack (4) of packs (2) of packaging sheets, which means consist of a horizontal blade (218) for separating and supporting the uppermost pack (2) from the pack immediately below it (2') on which it is resting, and from any packs (2) that may be adjacent to the target pack (2) on one or more faces thereof, which blade (218) is connected to means of movement (4, 6, 7, 8, 9, 10, 12) for positioning it in a position of readiness in front of at least one predetermined free face (202) of the particular target pack (2) and for executing a first stroke in which the separating blade (218) is inserted between the lower face of the uppermost pack (2) and the horizontal upper face of the pack (2) immediately underneath it; a second stroke in which the extracted pack (2) is removed from the lower pack (2') and from any laterally adjacent packs (2), and in which it is moved to a position of non-interference with such; and a stroke in which the extracted pack (2) is transferred to a subsequent processing machine (3), such as a cigarette packaging machine, or to means (11) for conveying the extracted pack (2) to said subsequent processing machine (3), while at the same time said separating blade (218) acts as a support surface for the extracted pack (2) while the latter is being transferred and forwarded from the stack (4) to the processing machine (3) or to the other conveying means (11), the device being characterized in that in combination with the separating and supporting blade (218), the device comprises blower means (22) directed at the plane of separation between the target pack (2) and the pack (2') immediately underneath it and that generate in the direction of said plane, that is to say towards the lower edge of the free face of the target pack (2), a jet of air at sufficient pressure to lift the uppermost pack (2) from that (2') immediately below it.

2. Device according to Claim 1, characterized in that the separating and supporting blade (218) is supported so that it can move together with the blower means (22) into the position of readiness, whereas it can be moved (15, 16, 17) separately relative to them from the position of readiness to the position of extraction, in which it is inserted between the uppermost target pack (2) and the pack (2') immediately below it.

3. Device according to Claim 1 or 2, characterized in that the blower means (22) comprise blower nozzles which in the position of readiness for working are located immediately in front of the free insertion face of the uppermost pack (2), at a predetermined distance from it, and are directed at the plane of separation between the two superimposed packs (2, 2'), while the separating and supporting blade (218) is located in the correct position of vertical alignment with the target pack (2), in order to extract the same, and is inserted between the two packs (2, 2') with a translational movement (15, 16, 17) along a path parallel to the lower face of the pack, that is to say generally approximately horizontal and rectilinear against said free face (202) of the pack (2), after which it is removed from any packs adjacent either on the transverse face with respect to the insertion stroke of the separating blade (218) or on those faces that are orientated parallel to said insertion stroke, with a backward (15, 16, 17) and/or upward (5, 6, 8) movement of the separating and supporting blade (218).

4. Device according to Claim 3, characterized in that in the correct vertical position of extraction, the separating and supporting blade (218) is a certain distance above the upper face of the lower layer of packs (2) of packaging sheets, that is to say above the plane of separation between two superimposed packs (2, 2'), and is orientated approximately parallel with this face, while on its free inserting end there is a thin end tongue (318) that slopes towards said plane of separation between the superimposed packs (2, 2') and whose free forward edge ends a very short distance from said plane.

5. Device according to one or more of the previous claims, characterized in that the blower nozzles (22) are so constructed (222, 322) as to generate a jet directed approximately perpendicularly to the lower edge of the free face of the target pack (2) and extending along a front parallel to the lower edge of the pack (2) on the free face (202) where the separating and supporting blade (218) is inserted, with a predetermined length, which may even be less than the length of said lower edge and which is preferably confined within a space approximately equal to the width of the separating and supporting blade (218) and which has very little thickness.

6. Device according to Claim 5, characterized in that the separating jet of air is oriented so as to slope down towards the lower edge of that free face (202) of the target pack (2) which is nearest to the separating and supporting blade (218).

7. Device according to Claim 6, characterized in that the slope of the jet of air, that is to say of the blower nozzles (22), is adjustable, the blower nozzles (22) being able to pivot (23, 24, 25, 26) about an axis parallel to the lower face of the target pack (2).

8. Device according to one or more of the previous claims, characterized in that the blower nozzles (22) are also provided with means for cutting off the jet of air when the tongue (318) of the separating and supporting blade (218) has entered a very short predetermined distance under the target pack (2).

9. Device according to Claim 8, characterized in that the blower nozzles (22) can be pivoted about a horizontal axis transverse to the stroke of the separating blade (218), being positioned at a height such that they are pivoted upwards during the stroke of extraction of the pack (2) by said separating blade (218), that is to say by its tongue (318), in an angular position of interference with a sensor (32) that controls the supply of compressed air or means for cutting off the jet, such as a light barrier, or the like, elastic means (26) being provided for restoring the initial angular position, when the separating blade (218) is in the position of readiness.

10. Device according to Claim 8, characterized in that the blower nozzles (22) are supported so as to project transversely from the exterior towards the centre of the separating blade (218), immediately above the latter, and are mounted on horizontal spindles (23) from which they project radially towards the target pack (2), said spindles being supported in turn, so as to be able to rotate about their axis, by the lower ends of stationary vertical pillars (24) situated on either side of and a certain distance from the separating blade (218), while the blower nozzles (22) are positioned at a height relative to the separating blade (218) such that, in a predetermined position of short insertion of the sloping tongue (318) beneath the target pack (2), the blower nozzles (22) are contacted by an intermediate portion of said sloping tongue (318) and are pivoted upwards by the latter as the pack (2) extraction stroke continues, against the action of elastic means (26) for restoring the blower nozzles (22) to their initial angular position, into a raised angular position, in which the blower nozzles (22) interfere with the sensors (32) that control the compressed air supply, such as a light barrier, or the like.

11. Device according to one or more of the previous claims, characterized in that the separating and supporting blade (218) is formed by the lower jaw (18) of a grab comprising, away from the insertion part, a wall (118) perpendicular to said blade (218), that is vertical, which abuts against the opposing free face (202) of the target pack (2), which jaw can be moved along a rectilinear insertion path parallel to the plane of separation between the superimposed packs (2), and which jaw is suspended from a sliding block (16) travelling back and forth along a guide (12), while the opposing upper jaw (19, 20) can be moved in a perpendicular direction relative to said separating and supporting blade (218), that is relative to the upper face of the target pack (2) and is stationary relative to the translational movement of the lower jaw (18, 118, 218) and located (13) in such a way that when the extracting and forwarding device (10) is in the position of readiness said upper jaw (19, 20) is superimposed on the upper face of the target pack (2).

12. Device according to Claim 11, characterized in that the upper jaw is formed by a pressing member (19, 20) so that it can be moved perpendicularly to the upper face of the target pack (2) and is supported by a frame (13) to which are fixed the guide (15) and sliding block (16) for the movable lower jaw (18, 118, 218).

13. Device according to one or more of the previous claims, characterized in that the upper jaw (19, 20) for clamping the extracted pack (2) has at least one other pressing member (30) which is positioned (113) stationary during the insertion and extraction stroke of the movable jaw (18, 118, 218) over the opposite face of the pack (2) from that nearest the separating and supporting blade (218) and which compresses the target pack (2) perpendicularly to its upper and lower faces, producing an effect of lifting and/or of relieving the weight on the upper face of the pack (2') immediately underneath it, especially in that area of the lower face of the target pack (2) which lies at its edge facing the separating and supporting blade (218).

14. Device according to one or more of the previous claims, characterized in that the upper clamping jaw (19, 20) may also have other pressing members (30) acting on adjacent packs (2), both on the target pack (2) transverse wall remote from the separating and supporting blade (218) and on the target pack (2) walls orientated in the direction of insertion of the separating and supporting blade (218), which means (30) remain active, keeping said adjacent packs (2) in position at least during the stroke of insertion of the separating and supporting blade (218) between the target pack (2) and the pack (2') underneath it.

15. Device according to Claims 13 and 14, characterized in that the pressing members for tilting the target pack (2) and those for keeping the adjacent packs (2) in position are formed by at least one single pressing member (30) carrying out both said functions, preferably by two or more pressing members (30) also carrying out both said functions and so positioned as to act at the corners of that face of the target pack (2) which is transverse with respect to the direction of insertion of the separating blade (218) and furthest from the latter, placing itself partially on the target pack (2) and on at least one of the other, immediately adjacent packs (2), preferably simultaneously on more than one of said adjacent packs (2), provided the shape of the packaging sheets (102) allows this.

16. Device according to Claim 15, characterized in that said pressing members (30) for tilting or unloading the target pack (2) and keeping adjacent packs (2) in position are arranged so as to place themselves simultaneously both on the corners of the target pack (2) and on the adjacent corners of all the remaining packs (2) surrounding the target pack (2), in particular those of the three adjacent packs (2) if the latter are approximately rectangular parallelepipeds or at any rate have more or less coinciding corners.

17. Device according to one or more of the previous claims, characterized in that the working parts of which it is composed, that is to say the movable jaw (18) with the separating and supporting blade (218), the upper clamping jaw (19, 20) with the tilting and pack-holding pressing members (30), the blower nozzles (22) and the means (15, 16, 17) for guiding and actuating the separating and supporting blade (218), that is to say the movable lower jaw (18), along the rectilinear insertion and return stroke, are additionally supported by a frame (13, 113) able to rotate (14, 114, 214, 314) about an axis perpendicular to the upper face of the packs (2) of packaging sheets (102), that is in particular about a vertical axis, so as to be able to rotate the device to suit the orientation of the packs (2) and always bring them to the subsequent processing machine (3) with the correct predetermined orientation.

18. Device according to one or more of the previous claims, characterized in that it comprises sensors (21) for monitoring the strokes of insertion and removal and for detecting the presence of a pack (2) in the extraction position.

19. Device according to Claim 18, characterized in that it has stop means (40, 41) defining the end of the stroke at the position of extraction of the pack (2), which means comprise progressive decelerator means, which may in particular be elastic means or a damper (140) of the jaw (18) in the last part of the pack (2) extraction stroke, which decelerator means (140) pass into a window (418), without interfering therewith, in the vertical abutment wall (118) of the movable jaw (18) when the latter is in the rear end-of-stroke position.

20. Device according to one or more of the previous claims, characterized in that it is provided with sensors (28, 29) for monitoring the position of readiness, that is to say the position of alignment with respect to the plane of separation between the target pack (2) and the pack (2') underneath it.

21. Device according to Claim 20, characterized in that the vertical-position sensors are formed by rods (29) orientated perpendicularly to the upper faces of the packs (2) in the stack (4) and having feet (129) which come down onto a separating sheet between the individual layers of packs (2) of the stack (4), which rods (29) are supported so as to be able to travel in the direction of their axis inside tubular guides (224), preferably inside guide holes running through the supporting pillars (24) of the blower nozzles (22), and project from the lower end of these with the feet (129) and from the upper end with means (229) of interference with stationary sensors (28) of the position of said upper end (229).

22. Device according to one or more of the previous claims, characterized in that it is suspended from a horizontal carriage (9) travelling along a rectilinear horizontal guide (12) which is orientated in the forwarding direction (A), while said guide (12) is integral with a carriage (7) suspended from and travelling along a second horizontal guide (5), transverse to the first, and said second guide (5) is carried cantilever-fashion aligned with the vertical mid plane of the stack (4) of packs (2) of packaging sheets (102), above this stack, by end brackets (6) that can be raised and lowered.

23. Device according to Claim 22, characterized in that it is suspended under a supporting beam (8) and laterally projecting therefrom from a supporting frame (13) which is slung under the carriage (9) in such a way that it can rotate (14) about a vertical axis and which carries, suspended beneath it, a horizontal rectilinear guide (15) for the sliding block (16) carrying the movable jaw (18) and stationary means supporting the pressing members (19, 30) and the sensors (21, 28) and pillars (24) arranged laterally adjacent to the movable lower jaw (18) and suspended vertically downwards to support the blower nozzles (22).
